# DEMANDE DE BREVET EUROPEEN

(11) **EP 1 005 196 A1**
(43) Date de publication de la demande: **31.05.2000**
(21) Numéro de dépôt: 99402941.1
(22) Date de dépôt: 26.11.1999
(51) Int. Cl.: H04L 12/24

(54) **Système et procédé d'interrogation à distance d'agents SNMP**

(30) Priorité: 27.11.1998 FR 9814937
(71) Demandeur: BULL S.A., 78434 Louveciennes Cedex (FR)
(72) Inventeur: Bonnin, Alain, 95150 Taverne (FR)

(57) **Abrégé**

Système et procédé d'interrogation à distance des agents SNMP entre un ordinateur local (OL) pourvu d'un système de gestion de fichier (SGF) et d'un gestionnaire SNMP (17) communiquant par des moyens de communication définis par un port principal UDP selon le protocole SNMP/UDP/IP, avec un réseau (10) auquel est connecté au moins un ordinateur distant (OD1 à OD4) gérant une application et pourvu de moyens de mémorisation et comportant chacun un logiciel agent SNMP distant (20) destiné à gérer des objets identifiés par le gestionnaire SNMP (18) grâce à une adresse IP principale. Chaque ordinateur distant (OD) du système comporte un premier logiciel dit "périodique" (LP) dont la fonction est d'envoyer, par une fonction transfert de fichiers triés, un fichier trié vers l'ordinateur local (OL), qui comporte un logiciel de réception (LR) pour détecter la réception d'un fichier trié et modifier, à la réception du fichier trié, d'une part, l'adresse IP principale par remplacement par une adresse IP locale et d'autre part, le numéro de port par un port UDP libre en local et enfin, le programme de lancement d'une instance d'un agent SNMP local pour lire de manière dichotomique les informations reçues dans le fichier trié.

## Description

La présente invention concerne un système et un procédé d'interrogation à distance d'agents SNMP entre un ordinateur local et une pluralité d'ordinateurs distants.

Il existe aujourd'hui un réseau mondial d'ordinateurs qui se nomme Internet. Le réseau Internet repose sur une famille de protocoles nommés "TCP/IP". Lorsque le réseau fonctionne en mode connecté, le protocole TCP/IP est de type TCP/IP. Il est de type UDP/IP, lorsque le réseau fonctionne en mode non connecté. Dans ce cas, le protocole TCP/IP de type UDP/IP n'est pas sécurisé, car une trame peut se perdre sur le réseau sans que l'émetteur soit averti. Dans le cas du protocole TCP/IP de type IP, l'émetteur est toujours averti de la bonne réception d'une trame. Pour administrer un ordinateur sur le réseau Internet à partir d'un autre ordinateur, on utilise le protocole SNMP (Simple Network Management Protocol) de la famille des protocoles TCP/IP. C'est en informatique, un protocole d'administration standardisé par des documents appelés "RFC" (Request For Comments). Le protocole SNMP permet à un ordinateur, ci-après dénommé "l'ordinateur local" (OL), comportant un logiciel de gestionnaire SNMP, ci-après appelé "le gestionnaire SNMP", de communiquer par un protocole réseau de type SNMP/UDP/IP, avec un autre ordinateur, ci-après appelé "l'ordinateur distant" (OD), comportant un logiciel d'agent SNMP, ultérieurement appelé "l'agent SNMP". Pour s'adresser sur un réseau à un agent SNMP à partir d'un gestionnaire SNMP, on utilise un port UDP et une adresse IP.

Il existe de nombreux agents SNMP implantés dans le réseau sur les ordinateurs, sur les routeurs, etc. Le dialogue SNMP de ces agents est constitué de commandes et d'un message rudimentaires (GET, GET NEXT, SET et TRAP). C'est pour cette raison que le protocole est qualifié de simple. Les commandes GET, GET NEXT et SET sont des requêtes émises par le gestionnaire SNMP. Par exemple, le gestionnaire SNMP de l'ordinateur local (OL) peut faire un GET sur un objet SNMP de l'ordinateur distant (OD). Un objet SNMP est ordonné par un identificateur OID (Object Identifier) ; il est d'un type déterminé tel que entier, chaîne de caractères, etc, et présente une valeur à un instant donné. A titre d'exemple, un objet "nombre de feuilles restantes dans l'imprimante n°3" est désigné par un OID, 1.3.6.1.4.1.107.128.18.12.3. 1.3 est fixé par l'ISO. 1.3.6.1.4.1. désigne une entreprise. 1.3.6.1.4.1.107 détermine une entreprise particulière, BULL par exemple. 1.3.6.1.4.1.107.128 désigne les imprimantes contenant des agents SNMP, 1.3.6.1.4.1.107.128.18 les imprimantes d'un local donné, 1.3.6.1.4.1.107.128.18.12 l'objet « nombre de feuilles restantes dans une imprimante », 1.3.6.1.4.1.107.128.18.12.3 l'imprimante n°3. L'objet "nombre de ........." est dans cet exemple de type entier et présente une valeur égale à 28 à un instant t donné. A l'instant t, il reste 28 feuilles dans l'imprimante numéro 3. Si le gestionnaire SNMP de l'ordinateur local (OL) émet un GET sur l'objet "nombre de feuilles restantes dans l'imprimante numéro 3" de l'ordinateur distant, l'agent SNMP de l'ordinateur distant (OD), qui gère cet objet, répond que dans l'objet "nombre de feuilles restantes dans l'imprimante numéro 3", il y a "28 feuilles". Ceci indique au gestionnaire SNMP que l'imprimante numéro 3 a encore 28 feuilles restantes dans son bac. Le gestionnaire SNMP peut faire un GET NEXT sur l'objet "nombre de feuilles restantes dans l'imprimante numéro 3". L'agent SNMP susceptible de répondre est celui qui gère l'objet dont l'OID succède à l'OID de l'objet "nombre de feuilles restantes dans l'imprimante n°3". Dans le présent exemple, l'objet, dont l'OID succède à l'OID de l'objet "nombre de feuilles restantes dans l'imprimante n°3", est l'objet "nombre de feuilles restantes dans l'imprimante n°4". L'agent SNMP, installé sur l'ordinateur distant qui gère l'imprimante numéro 4, répond que dans l'objet "nombre de feuilles restantes dans l'imprimante numéro 4", de type "entier", il y a "16 feuilles", et ainsi de suite sur toutes les autres imprimantes de l'ordinateur distant (OD) jusqu'à ce que l'on passe à un OID désignant un autre type d'objet SNMP tel que, par exemple, la résolution d'un scanner.

Les ordinateurs étant de plus en plus puissants, le nombre des objets gérés par des agents est de plus en plus grand. Par exemple, de plus en plus d'imprimantes ou de fichiers sont gérés par le même ordinateur. Le nombre de requêtes augmente. Il en résulte une charge importante du réseau et un temps de réponse accru.

Les messages d'alarme TRAP sont des événements non sollicités par le gestionnaire SNMP de l'ordinateur local (OL), mais émis par l'agent SNMP de l'ordinateur distant (OD). Par exemple, si l'agent SNMP détecte que l'ordinateur distant (OD) n'a plus de feuilles restantes dans l'imprimante numéro 2, il peut émettre un TRAP vers le gestionnaire SNMP de l'ordinateur local (OL). Cela évite au gestionnaire SNMP de demander périodiquement s'il reste des feuilles dans l'imprimante. Pour s'adresser sur un réseau à un agent SNMP à partir du gestionnaire SNMP installé sur l'ordinateur local, on utilise un port mettant en oeuvre le protocole TCP/IP de type UDP/IP par la suite désigné "port UDP" et une adresse IP.

En général, le port UDP numéroté 161 est réservé comme port d'écoute pour les agents SNMP par le protocole SNMP standard. Un agent SNMP d'un ordinateur distant gère une MIB, (Management Information Base, base d'informations d'administration) organisant sous forme arborescente des objets SNMP. Par exemple, un agent SNMP peut gérer un objet SNMP global et unique, comme le pourcentage de consommation globale du ou des processeurs de l'ordinateur distant ou bien des objets SNMP multiples, comme le pourcentage de consommation de CPU d'une application. Dans ce dernier cas, il y a autant d'instances gérées par l'agent SNMP de ce type d'objet SNMP (pourcentage de consommation de CPU d'une application), qu'il y a d'applications sur l'ordinateur. L'objet est dit multi-instancié et est représenté par une "table SNMP". Lorsque le gestionnaire SNMP interroge des tables SNMP comportant de nombreuses instances, il utilise un mécanisme de requêtes et de réponses. L'interrogation de plus de 100 instances peut, par exemple, entraîner une utilisation intensive du réseau et dégrader les performances de l'ordinateur interrogé.

Des tentatives pour résoudre ce problème ont été faites, par exemple, en optimisant les requêtes SNMP. Ainsi, on a essayé de regrouper plusieurs demandes d'attributs sur une trame SNMP de manière à réduire le nombre de requêtes. Cependant, la trame est limitée en longueur et le nombre de requêtes reste important. Une autre tentative consiste à utiliser un autre protocole, mais dans ce cas, le gestionnaire SNMP ne fonctionne plus et ne permet plus d'administrer un réseau du type Internet.

Le but de l'invention est donc de pallier les inconvénients de l'art antérieur, tout en utilisant le gestionnaire SNMP.

Ce but est atteint par le fait que le système d'interrogation à distance d'au moins un agent SNMP d'un ordinateur distant à partir d'un gestionnaire SNMP d'un ordinateur local pourvu de moyens de mémorisation, le gestionnaire communiquant par des moyens de communication avec au moins un ordinateur distant, chaque agent SNMP distant gérant des objets appartenant à l'ordinateur distant, est caractérisé en ce que chaque ordinateur distant comporte un logiciel dit "périodique" apte à constituer un fichier comprenant des informations sur les objets gérés par l'ordinateur distant concerné et à transférer le fichier vers l'ordinateur local, l'ordinateur local comportant un logiciel de réception apte à détecter la réception dudit fichier et lire les informations contenues dans ledit fichier pour les stocker dans lesdits moyens de mémorisation, les informations stockées étant susceptibles d'être utilisées pour répondre en local aux requêtes du gestionnaire.

Selon une autre particularité, le logiciel périodique interroge de manière périodique l'agent SNMP distant de l'ordinateur distant sur lequel il est installé pour stocker dans ledit fichier les réponses de l'agent.

Selon une autre particularité, la périodicité des interrogations et des transferts peut être définie sur un ordinateur distant par l'utilisateur.

Selon une autre particularité, les moyens de communication sont constitués par un port principal UDP selon le protocole SNMP/UDP/IP, et un réseau auquel est connecté au moins un ordinateur distant, l'ordinateur distant étant identifié par le gestionnaire SNMP grâce à une adresse IP principale ; à la réception dudit fichier, le logiciel de réception modifie d'une part, ladite adresse IP principale en la remplaçant par une adresse IP locale et d'autre part, remplace le numéro de port principal de l'agent SNMP distant par un port UDP libre en local, et le logiciel de réception lance un agent SNMP local sur le port UDP libre en local pour lire les informations contenues dans ledit fichier susceptibles d'être utilisées pour répondre en local aux interrogations du gestionnaire

Selon une autre particularité, ledit fichier est trié et les informations sont lues de manière dichotomique.

Selon une autre particularité, le fichier trié est compressé.

Selon une autre particularité, le logiciel périodique comporte des moyens permettant de remplir un second fichier dit "différentiel" qui comporte uniquement les identificateurs d'objets gérés dont les valeurs ont évolué par rapport aux valeurs stockées dans le premier fichier.

Selon une autre particularité, ledit fichier contient l'identificateur SNMP, le type SNMP et la valeur de chacun des objets SNMP gérés par l'agent SNMP distant.

Selon une autre particularité, l'ancienne adresse IP principale de l'agent SNMP devient une adresse IP secondaire pour permettre au gestionnaire SNMP de l'ordinateur local de continuer à localiser les TRAP SNMP émis par l'agent SNMP distant d'un ordinateur distant.

Selon une autre particularité, l'ordinateur local comporte un régulateur (dispatcher) et le logiciel de réception lance le régulateur (dispatcher) sur le port UDP libre en local au lieu d'un agent SNMP local.

Selon une autre particularité, le régulateur interroge soit, sur certaines parties de la MIB, un agent SNMP de l'ordinateur local qui est lancé sur un autre port UDP libre soit, sur les autres parties de la MIB, l'agent SNMP distant de l'ordinateur distant.

Un autre but de l'invention est de proposer un procédé d'interrogation à distance palliant les inconvénients de l'art antérieur.

Ce but est atteint par le fait que le procédé d'interrogation à distance d'au moins un agent SNMP distant d'un ordinateur distant à partir d'un gestionnaire SNMP d'un ordinateur local pourvu de moyens de mémorisation, le gestionnaire communiquant par des moyens de communication avec au moins un ordinateur distant, chaque agent SNMP distant gérant des objets appartenant à l'ordinateur distant, est caractérisé en ce qu'il consiste à constituer dans l'ordinateur distant un fichier comprenant des informations sur les objets gérés par l'ordinateur distant concerné, à transférer ledit fichier vers l'ordinateur local, à détecter la réception dudit fichier au niveau de l'ordinateur local, à lire les informations contenues dans ledit fichier, à stocker les informations lues dans lesdits moyens de mémorisation, et à utiliser les informations stockées pour répondre aux interrogations du gestionnaire.

Selon une particularité, les moyens de communication sont constitués par un port principal UDP selon le protocole SNMP/UDP/IP, et un réseau auquel est connecté au moins un ordinateur distant, l'ordinateur distant identifié par le gestionnaire SNMP grâce à une adresse IP principale ; le procédé consiste, à la réception dudit fichier, à modifier ladite adresse IP principale en la remplaçant par une adresse IP locale, à remplacer le numéro de port principal de l'agent SNMP distant par un port UDP libre en local, et à lancer un agent SNMP local sur le port UDP libre en local pour lire les informations contenues dans ledit fichier susceptibles d'être utilisées pour répondre en local aux interrogations du gestionnaire.

Selon une particularité, le procédé consiste à lancer un logiciel régulateur (dispatcher) SNMP sur le port UDP libre en local, le logiciel régulateur (dispatcher) étant configuré pour interroger sur certaines parties de MIB soit l'agent SNMP local qui est lancé sur un autre port UDP libre, soit l'agent SNMP distant de l'ordinateur distant.

D'autres particularités et avantages de la présente invention apparaîtront plus clairement à la lecture de la description ci-après faite en référence aux dessins annexés dans lesquels :
- la figure 1 représente une vue schématique d'un système d'interrogation à distance permettant la mise en oeuvre du procédé,
- la figure 2 représente l'arborescence de fichiers de l'ordinateur local.

L'invention va maintenant être décrite en liaison avec les figures.

Pour la suite de la description, les répertoires sont représentés entre le signe supérieur et inférieur < >, les fichiers sont représentés entre des crochets [ ], et les arguments entre parenthèses ( ).

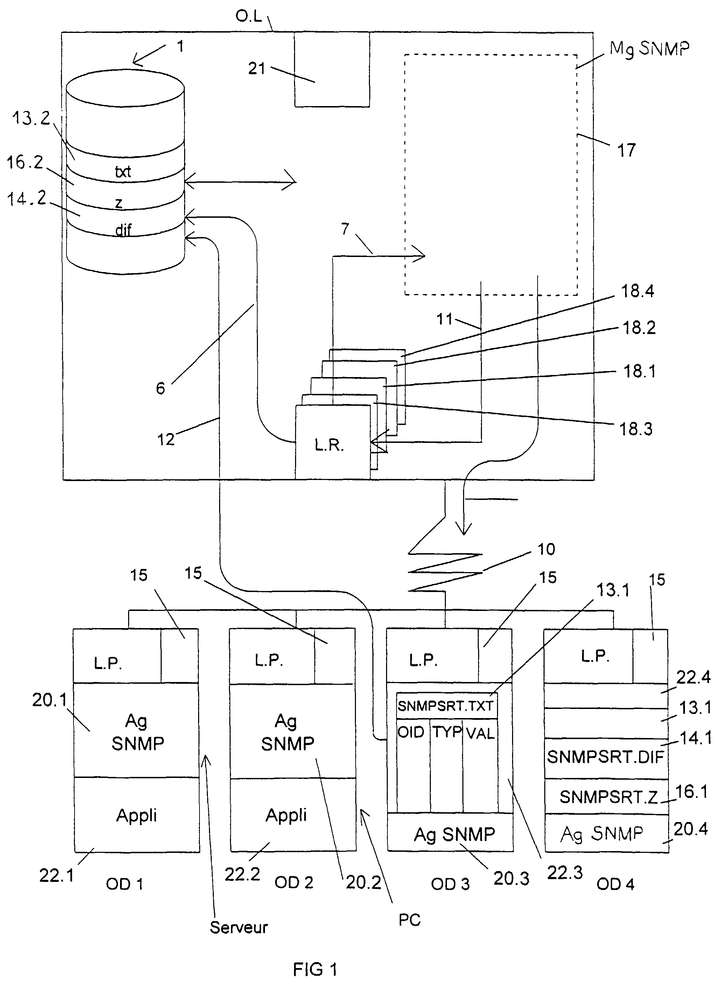

A la figure 1, un ordinateur local (OL) est équipé d'un système de gestion de fichiers (SGF) (1) ou de tout autre type de moyen de mémorisation, et d'un gestionnaire SNMP (Mg SNMP) (17). L'ordinateur local (OL) est connecté à un réseau (10), par exemple, Internet, et à travers ce réseau (10), à des ordinateurs distants (OD1 à OD4) qui peuvent être soit des serveurs, (par exemple OD1, OD4), soit des stations de travail (par exemple OD2, OD3). Quel que soit le type d'ordinateur distant, serveur ou station de travail, chaque ordinateur distant (OD1 à OD4) gère des applications respectives (22.1 à 22.4) et comporte un agent SNMP (Ag SNMP) (20.1 à 20.4). Ceci correspond à la structure connue dans l'art antérieur. Dans ce type de structure, le gestionnaire SNMP (17) émet des requêtes du type GET, GET NEXT ou SET et émet ces requêtes sur le réseau (10) à destination de l'un des ordinateurs distants. L'agent SNMP (20.1 à 20.4) de l'ordinateur distant reçoit la commande, récupère les informations nécessaires sur l'application et renvoie la réponse au gestionnaire SNMP (17) de l'ordinateur local (OL). Ce mode de fonctionnement a les inconvénients que l'on a expliqués précédemment dans l'introduction, à savoir qu'il augmente la charge du réseau et donc le coût performance /prix. Il présente également l'inconvénient d'empêcher tout contrôle de l'activité sur l'ordinateur distant.

Pour mettre en oeuvre l'invention, on ajoute à cette structure traditionnelle, d'une part sur l'ordinateur local, un logiciel de réception (LR) et d'autre part sur chaque ordinateur distant (OD1 à OD4), un logiciel périodique (LP).

Le logiciel périodique (LP) constitue un fichier (13.1, 14.1, 16.1) à partir d'informations de la MIB de l'ordinateur distant dans lequel le logiciel périodique (LP) est installé.

Dans la forme de réalisation représentée sur la figure 1, le logiciel (LP) met périodiquement dans un fichier (13.1) trié appelé [snmpsrt.txt], toutes les instances d'objets SNMP gérées par l'agent SNMP (Ag SNMP) (20.3) de l'ordinateur distant (OD3) (20.3) concerné, en interrogeant l'agent SNMP par des commandes "GET" ou "GET NEXT". La périodicité des interrogations et des transferts peut être définie sur l'ordinateur distant par l'utilisateur. Le fichier trié (13.1) contient les identificateurs d'objets SNMP (OID), les types SNMP (TYP) et les valeurs (VAL) des différentes instances des objets SNMP gérées par l'agent SNMP (20). Le logiciel périodique (LP) transfère le fichier (13.1, 14.1, 16.1) [snmpsrt] qui a été constitué sur l'ordinateur distant en question au SGF (1) de l'ordinateur local (OL).

Le fichier trié (13.1) peut également se présenter sous forme compressée (16.1) et dans ce cas, il s'appelle [snmpsrt.z].

Le fichier peut se présenter sous forme séquentiel indexé. Il est également possible d'utiliser une base de données.

Le logiciel périodique (LP) peut également élaborer un fichier différentiel (14.1) qui ne comporte que les informations sur les objets dont la valeur a évolué depuis la dernière interrogation ou requête et dans ce cas, le fichier différentiel s'appelle [snmpsrt.dif]. Ceci nécessite d'avoir au préalable un premier fichier (13.1) trié [*.txt]. Le logiciel (LP) envoie par transfert (12) de fichiers l'un des fichiers (13.1) ou différentiel (14.1) ou compressé (16.1) à l'ordinateur local (OL) où se trouve le gestionnaire SNMP (Mg SNMP) et plus précisément au SGF (1). Le logiciel périodique (LP) compare les tailles du fichier différentiel et du fichier trié obtenu à la requête précédente puis choisit de n'envoyer le fichier différentiel (16.1) [*.dif] que si sa taille est moins importante que celle du fichier (13.1) trié [*.txt].

Les informations collectées dans la MIB et intégrées dans un fichier (13.1, 14.1, 16.1) par le logiciel périodique (LP) puis transférées à l'ordinateur local (OL) sont stockées dans le système de gestion de fichiers (SGF) (1) sous forme de fichiers triés (13.2) [snmpsrt.txt], ou sous forme de fichiers compressés, triés (16.2) [snmpsrt.z], ou encore sous forme de fichiers différentiels (14.2) [snmpsrt.dif] au moyen du logiciel périodique (LP) installé sur chaque ordinateur distant. Ces fichiers sont rangés dans un répertoire comme on le verra ultérieurement.

Le logiciel de réception (LR), à la détection de la réception d'un fichier émis par le logiciel périodique (LP), met à jour dans la configuration du gestionnaire SNMP l'adresse IP principale de l'agent SNMP distant (Ag SNMP) (20.1-20.4) en la remplaçant par l'adresse IP locale (local host). L'adresse locale (local host) est constituée par une suite de chiffres 127.0.0.1 que l'on peut voir à la phase 2 de l'annexe 1. En même temps, l'ancienne adresse IP principale, qui, par exemple, comme représenté à l'annexe 1, était "129.182.165.15", devient une adresse IP secondaire (phase 2) pour que le gestionnaire SNMP continue à localiser les commandes TRAP émises par un agent SNMP distant (20.1-20.4) d'un ordinateur distant.

Nous rappellerons qu'un TRAP est une commande émise par l'agent SNMP (20.1-20.4) d'un ordinateur distant (OD1-OD4), lorsqu'il détecte la réalisation d'un événement mettant en cause le fonctionnement et nécessitant une intervention rapide du gestionnaire SNMP (17), par exemple, l'absence de papier sur une imprimante ou la défaillance du CPU.

Le logiciel de réception (LR) met également à jour dans la configuration du gestionnaire SNMP le numéro du port principal UDP selon le protocole SNMP/UDP/IP de l'agent SNMP distant (20.1 à 20.4) en le remplaçant par un numéro de port UDP libre en local.

Le logiciel de réception (LR) lance un agent SNMP local (18.1-18.4) sur le port UDP libre en local. Il correspond un agent SNMP local (18.1-18.4) par agent SNMP distant installé sur chaque ordinateur distant (OD1-OD4). L'adresse IP principale de l'agent SNMP distant (Ag SNMP) (20.1-20.4) ayant été remplacée par l'adresse IP locale (local host), les interrogations du gestionnaire (17) sont dirigées vers un agent SNMP local (18.1-18.4). Le gestionnaire SNMP (17), au lieu d'émettre des requêtes à destination de l'agent SNMP distant (20.1-20.4) d'un ordinateur distant va simplement émettre des requêtes locales (11) à destination de l'agent SNMP local (18.1-18.4) associé audit ordinateur distant. L'agent SNMP local (18.1-18.4) n'ayant aucune connaissance de la MIB de l'agent SNMP de l'ordinateur distant (20.1-20.4), répond aux requêtes "GET" ou "GET NEXT' du gestionnaire (17) par des réponses locales en lisant de manière dichotomique les informations reçues dans le fichier (13.2, 14.2, 16.2) du système de gestion de fichiers (SGF) (1), associé à l'ordinateur distant interrogé. La lecture du fichier (13.2, 14.2, 16.2) de manière dichotomique est explicitée dans ce qui suit. Chaque ligne du fichier (13.2, 14.2, 16.2) présente une taille fixe. Le système de gestion de fichiers (1) est susceptible d'indiquer au logiciel de réception (LR) la taille du fichier (13.2, 14.2, 16.2). Le logiciel de réception (LR) obtient le nombre de lignes (n) du fichier (13.2, 14.2, 16.2) en divisant la taille du fichier par la taille d'une ligne qui est fixe. Chaque ligne du fichier contient un identificateur d'objet SNMP (OID), un type SNMP (TYP) et une valeur SNMP (VAL). Le nombre de lignes du fichier est équivalent au nombre d'objets SNMP gérés par l'agent SNMP concerné. Une borne inférieure (min) est initialisée à 1, une borne supérieure (max) à n. Lorsque l'agent SNMP local recherche le type et la valeur d'un objet pour répondre à une requête du gestionnaire (17) (requête get), l'agent opère de la manière suivante :
■ Etape 1 : Si le nombre de lignes est égal à zéro, l'agent retourne une erreur au gestionnaire ;
■ Etape 2 : Si le nombre de lignes est différent de zéro, l'agent lit la ligne (min+max)/2 et plus particulièrement l'OID ;
■ Etape 3: Si l'OID lu est équivalent à l'OID demandé par le gestionnaire, l'agent renvoie le type et la valeur lus de l'OID en question au gestionnaire ;
■ Etape 4 : Si l'OID lu est plus grand que l'OID demandé, l'agent modifie la borne max en la remplaçant par la valeur ((min+max)/2)-1 et le nombre de lignes par la valeur (n/2)-1, puis repart à l'étape 1 ;
■ Etape 5: Si l'OID lu est plus petit que l'OID demandé, l'agent modifie la borne min en la remplaçant par la valeur ((min+max)/2)+1 et le nombre de lignes par la valeur (n/2)-1, puis repart à l'étape 1 ;

Lorsque l'agent SNMP local recherche le type et la valeur d'un objet dont l'OID suit l'OID donné pour répondre à une requête du gestionnaire (17) (requête getnext), l'agent opère de la manière suivante :
■ Etape 1 : Si le nombre de lignes est égal à zéro, l'agent retourne l'OID retrouvé, si l'OID retrouvé n'existe pas une erreur est retournée;
■ Etape 2 : Si le nombre de lignes est différent de zéro, l'agent lit la ligne (min+max)/2 et plus particulièrement l'OID ;
■ Etape 3 : Si l'OID lu est plus grand que l'OID demandé, l'agent modifie la borne max en la remplaçant par la valeur ((min+max)/2)-1 et le nombre de lignes par la valeur (n/2)-1, et positionne l'OID retrouvé avec l'OID lu puis repart à l'étape 1 ;
■ Etape 4 : Si l'OID lu est plus petit que, ou égal à, l'OID demandé, l'agent modifie la borne min en la remplaçant par la valeur ((min+max)/2)+1 et le nombre de lignes par la valeur (n/2)-1, puis repart à l'étape 1.

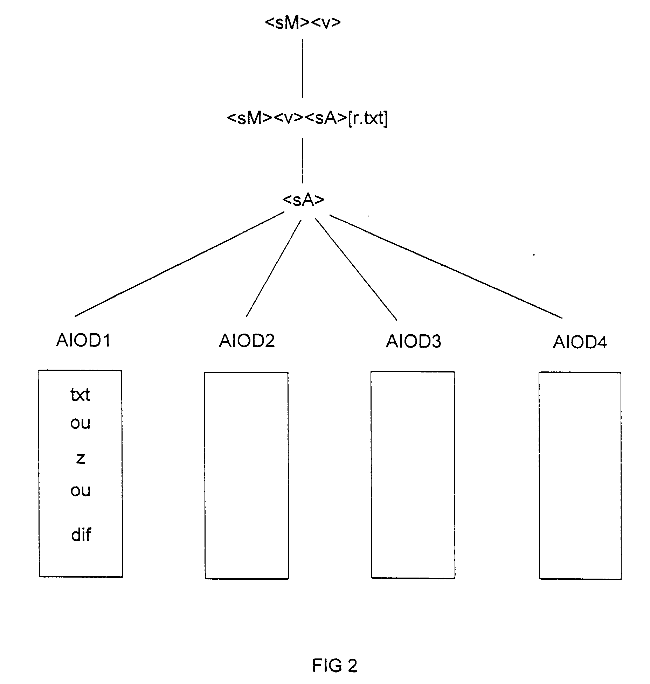

Le logiciel de réception (LR) consiste en une boucle périodique de surveillance de réception de fichiers transférés par le logiciel périodique (LP). Le logiciel de réception (LR) surveille périodiquement dans le système de gestion de fichiers (SGF) (1) une sous-arborescence (Al OD1, Al OD2, Al OD3, Al OD4, figure 2) de fichiers de l'ordinateur local. Le répertoire racine (sA, figure 2) de cette arborescence s'appelle <SNMP agent>. Ce répertoire racine se trouve sous le répertoire (SMV, figure 2) de la version du gestionnaire <SNMP Gestionnaire> <Version>. Sous ce répertoire SMV, se trouve le fichier (<SM> <V> <sA> [r.txt], figure 2) de configuration du logiciel de réception (LR) qui s'appelle <SNMP Gestionnaire> <Version> <SNMP Agent> [recept.txt]. Ce fichier contient la périodicité à laquelle le logiciel de réception (LR) doit se réveiller ainsi que la méthode d'accès à la configuration du gestionnaire SNMP (17), les numéros de ports libres et les associations de ports UDP avec les agents SNMP locaux et éventuellement, avec un régulateur (dispatcher) d'agents SNMP local, si l'ordinateur local est pourvu d'un logiciel régulateur (dispatcher).

Pour plus de renseignements sur le fonctionnement d'un régulateur (dispatcher), le lecteur pourra se référer à la demande de brevet BULL déposée le 21/11/92, publiée sous le numéro 2 698 461 et intitulée "Dispositif de traitement de l'information permettant la gestion d'une ressource informatique par un système d'administration".

Sous le répertoire racine (<sA>), le transfert (12) de fichiers SNMP triés crée à chaque fois un répertoire (Al OD1, AI OD2, Al OD3, Al OD4) par agent (20.1-20.4) de chaque ordinateur distant (OD1-OD4). Le nom du répertoire est le nom de l'agent distant connu par le gestionnaire SNMP (17). Le répertoire s'appelle <agent Name>, <SNMP Gestionnaire> <Version> <SNMP Agents> et contient le fichier SNMP trié [*.txt] ou [*.z] ou [*.dif] et éventuellement, le fichier [sdd.txt] de configuration du régulateur SNMP. Dès qu'un fichier SNMP trié est détecté par le logiciel de réception, il se l'approprie afin que le logiciel périodique (LP) puisse éventuellement en envoyer une mise à jour. Pour ce faire, le logiciel de réception (LR) change le nom du fichier SNMP trié par modification de son suffixe. Les fichiers de type compressé [snmpsrt.z] sont décompressés soit en fichier texte [snmpsrt.txt], soit en fichier différentiel [snmpsrt.dif]. Les fichiers de type texte [snmpsrt.txt] changent de nom en [snmpsrt.drf]. Les fichiers de type différentiel sont appliqués à l'ancien fichier [snmpsrt.drf] afin d'en obtenir un nouveau [snmpsrt.trs], puis le logiciel de réception (LR) donne une copie du fichier SNMP trié [snmpsrt.trs] au gestionnaire SNMP (17). Pour ce faire, le logiciel de réception (LR) change le nom de cette copie en [snmpsrt.srt].

Le logiciel de réception (LR) peut déclencher un troisième mécanisme si l'agent SNMP distant (20.1 à 20.4) gère des requêtes "SET" ou bien si certaines parties de la MIB SNMP imposent l'accès distant, comme, par exemple, savoir si l'agent SNMP distant (20.1 à 20.4) est accessible. Nous rappellerons qu'une requête "SET", émise par le gestionnaire SNMP (17) de l'ordinateur local (OL), permet de fixer des valeurs d'attributs des objets gérés par l'agent (20.1-20.4) de l'ordinateur distant (OD1-OD4). Dans le cas où les conditions mentionnées ci-dessus sont remplies, l'ordinateur local (OL) doit disposer de la fonction régulateur (dispatcher) (21) et le logiciel de réception, au lieu de lancer un agent SNMP local (18.1-18.4) sur le port libre en local, lance une instance du régulateur (21) (dispatcher) sur ce port libre en local. Le régulateur est configuré pour interroger soit, sur certaines parties de MIB, un agent SNMP local (18.1 à 18.4) lancé sur un autre port libre en local soit, sur les autres parties de la MIB, un agent SNMP distant (20.1 à 20.4). Dans ce dernier cas, le logiciel de réception (LR) attribue au régulateur (dispatcher), par le biais de son fichier de configuration [recept.txt], le port UDP libre de l'agent SNMP distant (20.1-20.4). S'il existe un fichier [sdd.txt] de configuration du régulateur (21) (dispatcher), le logiciel de réception (LR) change son nom en [sdd.trs]. Son contenu est modifié en remplaçant le numéro de port, soit par le numéro de port de l'agent SNMP local (18.1 à 18.4), soit par le numéro de port de l'agent SNMP distant préfixé (adresse IP ou nom de l'ordinateur distant). Le fichier [sdd.trs] change de nom en [sdd.cnf], soit si le fichier [sdd.cnf] n'existe pas, soit s'il est différent. S'il est différent et si le régulateur (21) (dispatcher) de l'agent SNMP (18.1-18.4) "sddsrt-h (agent Name)-p(sddUdpPort)" est déjà lancé, le logiciel de réception (LR) l'arrête. Puis, le logiciel de réception (LR) lance le régulateur (dispatcher) (21) de l'agent SNMP (18.1-18.4) "sddsrt-h (agent Name)-p(sddUdpPort)" correspondant. Le logiciel de réception (LR) met à jour la configuration du gestionnaire SNMP (17). Pour chaque agent SNMP distant (20.1 à 20.4), la configuration du gestionnaire SNMP (17) contient le nom de l'agent, l'adresse IP principale, la ou les adresses IP secondaires, et le numéro de port UDP. L'adresse IP principale devient une adresse IP secondaire et est remplacée par l'adresse libre en local "local host". Le numéro de port UDP est remplacé soit par le numéro de port du régulateur (21) (dispatcher) s'il existe, soit par le numéro de port de l'agent SNMP local. Ceci correspond au fonctionnement de la phase 3 représentée à l'annexe 1 ci-après.

Pour plus de clarté, le procédé mis en oeuvre va être explicité à l'aide de l'annexe 1. Dans la phase 0, l'ordinateur local (OL), par son gestionnaire SNMP avec une adresse IP et un port UDP, est capable de communiquer avec l'agent SNMP d'un ordinateur distant (OD). Dans la phase 1, le gestionnaire SNMP émet une requête. L'agent SNMP de l'ordinateur distant (OD) remplit un fichier SNMP, compresse ce fichier, puis l'envoie par transfert de fichiers vers l'ordinateur local (OL). La phase 1bis représente le cas où l'agent SNMP de l'ordinateur distant (OD) émet un fichier différentiel. La phase 2 représente l'étape où le gestionnaire SNMP lance un agent SNMP local, après avoir au préalable changé la configuration de l'agent, en remplaçant l'ancienne adresse IP locale par une nouvelle adresse et en attribuant l'ancienne adresse principale en tant qu'adresse secondaire. Une fois cette configuration effectuée et l'agent SNMP local lancé, le gestionnaire SNMP interroge l'agent SNMP local au lieu de s'adresser à l'agent SNMP distant. La phase 3 représente le cas où l'ordinateur local est équipé d'un régulateur (dispatcher) qui peut être lancé et celui-ci va donc interroger l'agent SNMP distant sur certaines parties de la MIB ou l'agent SNMP local sur les autres parties de la MIB.

On comprend que par ces mécanismes, l'encombrement du réseau par les requêtes est très nettement réduit.

D'autres modifications à la portée de l'homme de métier font également partie de l'esprit de l'invention.

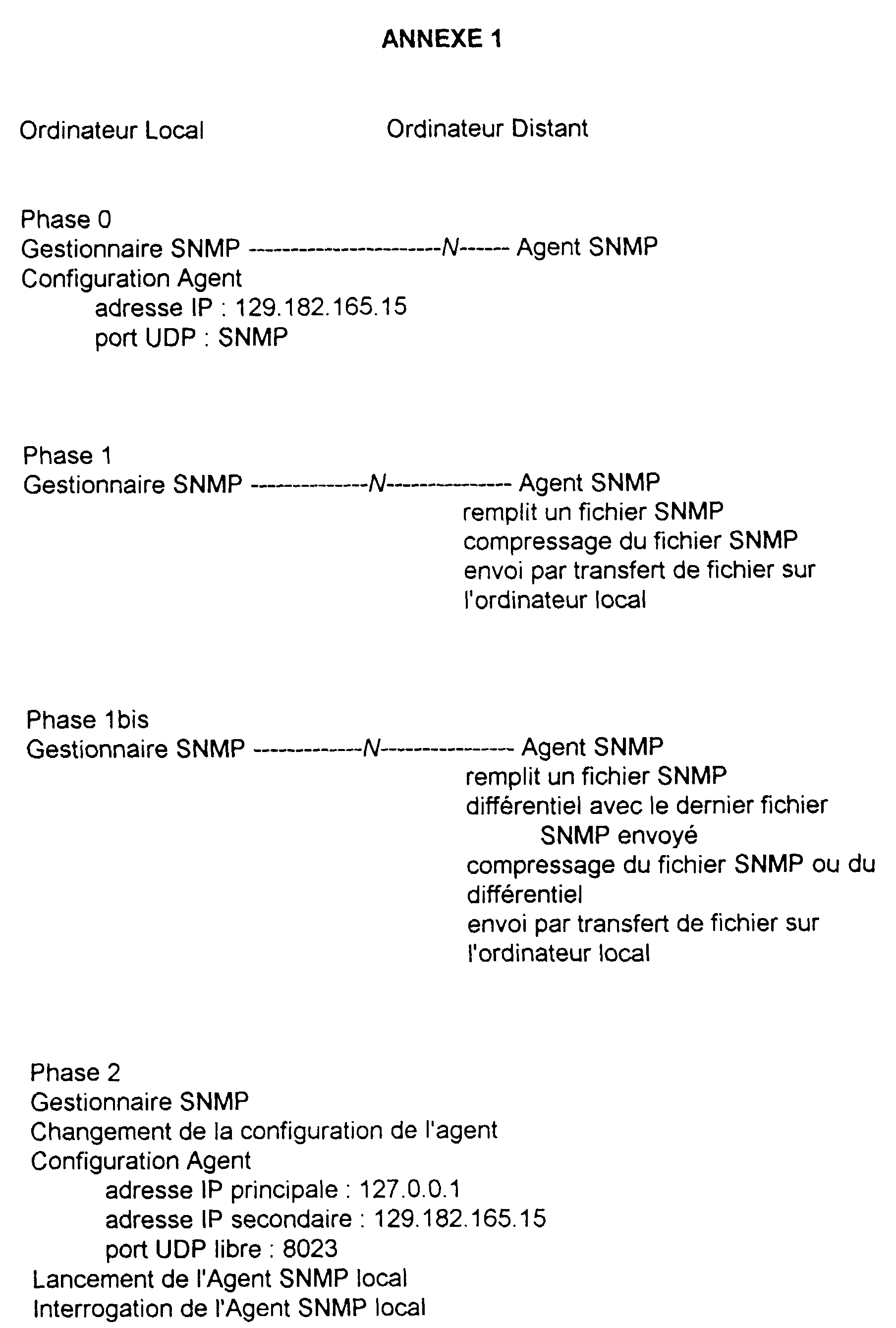

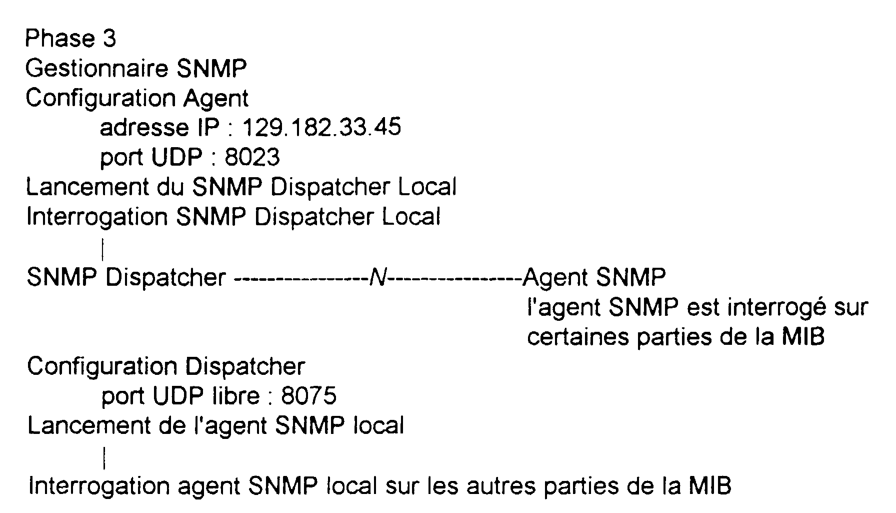

## Revendications

1. Système d'interrogation à distance d'au moins un agent SNMP (20.1-20.4) d'un ordinateur distant (OD1-OD4) à partir d'un gestionnaire SNMP (17) d'un ordinateur local (OL) pourvu de moyens de mémorisation (1), le gestionnaire (17) communiquant par des moyens de communication (10) avec au moins un ordinateur distant (OD1-OD4), chaque agent SNMP distant (20.1-20.4) gérant des objets appartenant à l'ordinateur distant respectivement (OD1-OD4), caractérisé en ce que chaque ordinateur distant (OD1-OD4) comporte un logiciel dit "périodique" (LP) apte à constituer un fichier (13.1, 14.1, 16.1) comprenant des informations sur les objets gérés par l'ordinateur distant (OD1-OD4) concerné et à transférer le fichier vers l'ordinateur local (OL), l'ordinateur local comportant un logiciel de réception (LR) apte à détecter la réception dudit fichier (13.1, 14.1, 16.1) et lire les informations contenues dans ledit fichier (13.1, 14.1, 16.1) pour les stocker dans lesdits moyens de mémorisation (1), les informations stockées étant susceptibles d'être utilisées pour répondre en local aux requêtes du gestionnaire (17).

2. Système d'interrogation à distance selon la revendication 1, caractérisé en ce que le logiciel périodique (LP) interroge de manière périodique l'agent SNMP distant (20.1-20.4) de l'ordinateur distant respectivement (OD1-OD4) sur lequel il est installé pour stocker dans ledit fichier (13.1, 14.1, 16.1) les réponses de l'agent.

3. Système d'interrogation à distance selon la revendication 2, caractérisé en ce que la périodicité des interrogations et des transferts peut être définie sur un ordinateur distant par l'utilisateur.

4. Système d'interrogation à distance selon l'une des revendications 1 à 3, caractérisé en ce que les moyens de communication sont constitués par un port principal UDP selon le protocole SNMP/UDP/IP, et un réseau (10) auquel est connecté au moins un ordinateur distant (OD1-OD4), l'ordinateur distant (OD1-OD4) étant identifié par le gestionnaire SNMP (17) grâce à une adresse IP principale, en ce que à la réception dudit fichier, le logiciel de réception (LR) modifie d'une part, ladite adresse IP principale en la remplaçant par une adresse IP locale et d'autre part, remplace le numéro de port principal de l'agent SNMP distant par un port UDP libre en local, et en ce que le logiciel de réception (LR) lance un agent SNMP local (18.1-18.4) sur le port UDP libre en local pour lire les informations contenues dans ledit fichier (13.1, 14.1, 16.1) susceptibles d'être utilisées pour répondre en local aux interrogations du gestionnaire (17).

5. Système d'interrogation à distance selon l'une des revendications 1 à 4, caractérisé en ce que ledit fichier (13.1, 14.1, 16.1) est trié et en ce que les informations sont lues de manière dichotomique.

6. Système d'interrogation à distance selon l'une des revendications 1 à 5, caractérisé en ce que le fichier (16.1) trié est compressé.

7. Système d'interrogation à distance selon l'une des revendications 1 à 6, caractérisé en ce que le logiciel périodique (LP) comporte des moyens permettant de remplir un second fichier dit "différentiel" qui comporte uniquement les identificateurs d'objets gérés dont les valeurs ont évolué par rapport aux valeurs stockées dans le premier fichier.

8. Système d'interrogation à distance selon l'une des revendications 1 à 7, caractérisé en ce que ledit fichier (13.1, 14.1, 16.1) contient l'identificateur SNMP, le type SNMP et la valeur de chacun des objets SNMP gérés par l'agent SNMP distant.

9. Système d'interrogation à distance selon la revendication 4, caractérisé en ce que l'ancienne adresse IP principale de l'agent SNMP devient une adresse IP secondaire pour permettre au gestionnaire SNMP de l'ordinateur local de continuer à localiser les TRAP SNMP émis par l'agent SNMP distant d'un ordinateur distant.

10. Système d'interrogation à distance selon la revendication 4, caractérisé en ce que l'ordinateur local comporte un régulateur (21) (dispatcher) et en ce que le logiciel de réception (LR) lance le régulateur (21) (dispatcher) sur le port UDP libre en local au lieu d'un agent SNMP (18.1 à 18.4) local.

11. Système d'interrogation à distance selon la revendication 10, caractérisé en ce que le régulateur interroge soit, sur certaines parties de la MIB, un agent SNMP de l'ordinateur local qui est lancé sur un autre port UDP libre soit, sur les autres parties de la MIB, l'agent SNMP distant de l'ordinateur distant.

12. Procédé d'interrogation à distance d'au moins un agent SNMP distant (20.1-20.4) d'un ordinateur distant (OD1-OD4) à partir d'un gestionnaire SNMP (17) d'un ordinateur local (OL) pourvu de moyens de mémorisation (1), le gestionnaire (17) communiquant par des moyens de communication avec au moins un ordinateur distant (OD1-OD4), chaque agent SNMP distant (20.1-20.4) gérant des objets appartenant à l'ordinateur distant respectivement (OD1-OD4), caractérisé en ce qu'il consiste à constituer dans l'ordinateur distant (OD1-OD4) un fichier (13.1, 14.1, 16.1) comprenant des informations sur les objets gérés par l'ordinateur distant (OD1-OD4) concerné, à transférer ledit fichier vers l'ordinateur local (OL), à détecter la réception dudit fichier au niveau de l'ordinateur local (OL), à lire les informations contenues dans ledit fichier, à stocker les informations lues dans lesdits moyens de mémorisation, et à utiliser les informations stockées pour répondre aux interrogations du gestionnaire (17).

13. Procédé d'interrogation à distance des agents SNMP selon la revendication 11, caractérisé en ce que les moyens de communication sont constitués par un port principal UDP selon le protocole SNMP/UDP/IP, et un réseau (10) auquel est connecté au moins un ordinateur distant (OD1-OD4), l'ordinateur distant (OD1-OD4) étant identifié par le gestionnaire SNMP (17) grâce à une adresse IP principale, en ce que le procédé consiste, à la réception dudit fichier, à modifier ladite adresse IP principale en la remplaçant par une adresse IP locale, à remplacer le numéro de port principal de l'agent SNMP distant par un port UDP libre en local, et à lancer un agent SNMP local (18.1-18.4) sur le port UDP libre en local pour lire les informations contenues dans ledit fichier (13.1, 14.1, 16.1) susceptibles d'être utilisées pour répondre en local aux interrogations du gestionnaire (17).

14. Procédé d'interrogation à distance des agents SNMP selon la revendication 13, caractérisé en ce qu'il consiste à lancer un logiciel régulateur (21) (dispatcher) SNMP sur le port UDP libre en local, le logiciel régulateur (21) (dispatcher) étant configuré pour interroger sur certaines parties de MIB soit l'agent SNMP local qui est lancé sur un autre port UDP libre, soit l'agent SNMP distant de l'ordinateur distant.
